# EUROPEAN PATENT APPLICATION

(11) **EP 4 806 778 A1**
(43) Date of publication of application: **16.09.2026**
(21) Application number: 24863809.0
(22) Date of filing: 23.07.2024
(51) Int. Cl.: B63B 39/03, B63B 35/44

(54) **FLOATING-TYPE WIND POWER FLOATING BODY AND BALANCING METHOD FOR FLOATING-TYPE WIND POWER FLOATING BODY**

(30) Priority: 06.11.2023 CN 202311464834
(71) Applicant: Huaneng Clean Energy Research Institute, Beijing 102209 (CN)
(72) Inventor: ZHOU, Yiming, Beijing 102209 (CN); LI, Weidong, Beijing 102209 (CN); CHEN, Jianjun, Beijing 102209 (CN)
(74) Representative: Metida
(86) International application number: PCT/CN2024/107043
(87) International publication number: WO 2025/097850

(57) **Abstract**

A floating wind power floating body and a method for balancing the floating wind power floating body are provided. The first floating body is connected with the second floating body through a first sealing part; the first floating body is connected with the third floating body through a second sealing part. The first water storage device is connected with the second water storage device through first transmission devices; the third water storage device is connected with the fourth water storage device through second transmission devices; the fifth water storage device is connected with the sixth water storage device through third transmission devices.

## Description

### TECHNICAL FIELD

The disclosure relates to the technical field of floating floating bodies, in particular to a floating wind power floating body and a method for balancing the floating wind power floating body.

### BACKGROUND

With the development of wind power generation technology, the application of floating wind power floating body is more and more extensive, and people pay more and more attention to the balance of floating wind power floating body in the application process.

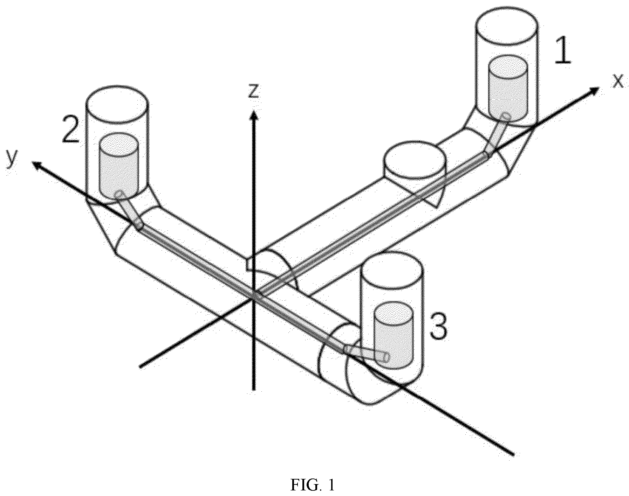

As shown in FIG. 1, in the current floating wind power floating body, the floating wind power floating body reaches the balance by transmitting the water in the first water storage bucket 1 to the second water storage bucket 2 and the third water storage bucket 3 respectively, but this floating wind power floating body cannot adjust the balance of the first water storage bucket 1, the second water storage bucket 2 and the third water storage bucket 3 in a short time, that is, the balance adjustment time of the existing floating wind power floating body is long.

### SUMMARY

In view of this, the disclosure provides a floating wind power floating body and a method for balancing a floating wind power floating body, aiming at reducing the balancing adjustment time of the floating wind power floating body.

The first aspect of the disclosure provides a floating wind power floating body. The floating wind power floating body includes a first floating body, a second floating body and a third floating body; a first water storage device and a second water storage device are arranged in the first floating body; a third water storage device and a fourth water storage device are arranged in the second floating body; a fifth water storage device and a sixth water storage device are arranged in the third floating body:
the first floating body is connected with the second floating body through a first sealing part; the first floating body is connected with the third floating body through a second sealing part;
the first water storage device is connected with the second water storage device through first transmission devices; the third water storage device is connected with the fourth water storage device through second transmission devices; the fifth water storage device is connected with the sixth water storage device through third transmission devices;
where, the first transmission devices, the second transmission devices and the third transmission devices are respectively provided with a water pumping device; a length of the first floating body is greater than lengths of the second floating body and the third floating body, and a length of the second floating body is equal to a length of the third floating body

Optionally, the first floating body is further provided with a tower bearing device.

Optionally, the floating wind power floating body further includes a tower and a wind power device;
one end of the tower is connected with the wind power device, and an other end of the tower is connected with the tower bearing device through a third sealing part, so as to support the tower and the wind power device through the tower bearing device.

Optionally, the first sealing part, the second sealing part and the third sealing part are flanges.

The second aspect of the disclosure provides a method for balancing a floating wind power floating body, which is suitable for the floating wind power floating body provided in the first aspect of the disclosure. The floating wind power floating body includes a first floating body, a second floating body and a third floating body; a first water storage device and a second water storage device are arranged in the first floating body; a third water storage device and a fourth water storage device are arranged in the second floating body; a fifth water storage device and a sixth water storage device are arranged in the third floating body, where the method includes:
determining a target flow rate according to a preset flow rate, a length of the first floating body and a length of the second floating body; where, if the preset flow rate is a flow rate of liquid in first transmission devices, the target flow rate is a flow rate of liquid in second transmission devices; if the preset flow rate is the flow rate of liquid in the two transmission devices, the target flow rate is the flow rate of liquid in the first transmission devices; the flow rate of liquid in the second transmission devices is equal to a flow rate of liquid in the third transmission devices;
controlling a water pumping device on transmission devices in each floating body to pump water, and pumping liquid stored in an initial water storage device to a terminal water storage device connected with the initial water storage device at the preset flow rate or the target flow rate, so that the terminal water storage device in each floating body simultaneously stores water with a target volume, so as to balance the floating wind power floating body;
where the initial water storage device is internally stored with liquid with a target volume in advance; the initial water storage device and the terminal water storage device connected with the initial water storage device include: the first water storage device and the second water storage device, the third water storage device and the fourth water storage device, and the fifth water storage device and the sixth water storage device.

Optionally, if the flow rate of liquid in the first transmission devices is the preset flow rate and each of flow rates of liquid in the second transmission devices and the third transmission devices is the target flow rate, controlling the water pumping device on transmission devices in each floating body to work and pumping liquid stored in the initial water storage device to the terminal water storage device connected with the initial water storage device at the preset flow rate or the target flow rate includes:
controlling a water pumping device on the first transmission devices in the first floating body to work, and pumping liquid stored in the first water storage device to the second water storage device at the preset flow rate;
controlling a water pumping device on the second transmission devices in the second floating body to work, and pumping liquid stored in the third water storage device to the fourth water storage device at the target flow rate;
controlling a water pumping device on the third transmission devices in the third floating body to work, and pumping liquid stored in the fifth water storage device to the sixth water storage device at the target flow rate.

Optionally, determining a target flow rate according to the preset flow rate, a length of the first floating body and a length of the second floating body in the floating wind power floating body includes:
calculating product of the length of the second floating body and the preset flow rate, and
dividing the product of the length of the second floating body and the preset flow rate by the length of the first floating body to obtain the target flow rate.

Optionally, if the flow rate of liquid in the second transmission devices is the preset flow rate and the flow rate of liquid in the first transmission devices is the target flow rate, controlling the water pumping device on the transmission devices in each floating body to work and pumping liquid stored in the initial water storage device to the terminal water storage device connected with the initial water storage device at the preset flow rate or the target flow rate includes:
controlling the water pumping device on the first transmission devices in the first floating body to work, and pumping liquid stored in the first water storage device to the second water storage device at the target flow rate;
controlling the water pumping device on the second transmission devices in the second floating body to work, and pumping liquid stored in the third water storage device to the fourth water storage device at the preset flow rate;
controlling the water pumping device on the third transmission devices in the third floating body to work, and pumping liquid stored in the fifth water storage device to the sixth water storage device at the preset flow rate.

Optionally, determining the target flow rate according to the preset flow rate, a length of the first floating body and a length of the second floating body in the floating wind power floating body includes:
calculating product of the length of the first floating body and the preset flow rate, and
dividing the product of the length of the first floating body and the preset flow rate by the length of the second floating body to obtain the target flow rate.

The disclosure provides a floating wind power floating body and a method for balancing the floating wind power floating body. The floating wind power floating body includes a first floating body, a second floating body and a third floating body. A first water storage device and a second water storage device are arranged in the first floating body; a third water storage device and a fourth water storage device are arranged in the second floating body; a fifth water storage device and a sixth water storage device are arranged in the third floating body. The first floating body is connected with the second floating body through a first sealing part; the first floating body is connected with the third floating body through a second sealing part. The first water storage device is connected with the second water storage device through first transmission devices; the third water storage device is connected with the fourth water storage device through second transmission devices; the fifth water storage device is connected with the sixth water storage device through third transmission devices. The first transmission device, the second transmission device and the third transmission device are respectively provided with a water pumping device. The length of the first floating body is greater than that of the second floating body and the third floating body, and the length of the second floating body is equal to that of the third floating body. According to the technical scheme provided by the disclosure, the floating wind power floating body is divided into three floating bodies, so that the water pumping device in the transmission device in each floating body can be controlled to work at the same time, and the liquid stored in the initial water storage device flows to the terminal water storage device connected with it at a preset flow rate or a target flow rate. So that the terminal water storage device in each floating body simultaneously stores water with target volume, and the floating wind power floating body can achieve balance, instead of transmitting the water in the water storage bucket 1 to the water storage bucket 2 and the water storage bucket 2 respectively as in the existing floating wind power floating body.

### BRIEF DESCRIPTION OF THE DRAWINGS

In order to clearly explain the embodiment of the disclosure or the technical scheme in the prior art, the drawings needed in the description of the embodiment or the prior art will be briefly introduced below. Obviously, the drawings in the following description are only the embodiment of the disclosue, and other drawings can be obtained according to the provided drawings without creative labor for ordinary skilled in the field.
FIG. 1 is a schematic structural diagram of an existing floating wind power floating body;
FIG. 2 is a schematic structural diagram of a floating wind power floating body according to an embodiment of the disclosure;
FIG. 3 is a schematic structural diagram of another floating wind power floating body according to an embodiment of the disclosure;
FIG. 4 is a structural diagram of a corresponding floating body fixed by a corresponding fixing device according to an embodiment of the disclosure;
FIG. 5 is a structural diagram of placing a corresponding floating body fixed by a fixing device on a storage device according to an embodiment of the disclosure; and
FIG. 6 is a flowchart of a method for balancing a floating wind power floating body according to an embodiment of the disclosure.

### DETAILED DESCRIPTION OF THE EMBODIMENTS

In the following, the technical scheme in the embodiment of the disclosure will be clearly and completely described with reference to the attached drawings in the embodiment of the disclosure. Obviously, the described embodiment is only a part of the embodiment of the disclosure, but not all of the embodiments. Based on the embodiments in the disclosure, all other embodiments obtained by ordinary skilled in the field without creative labor belong to the scope of protection of the disclosure.

As used herein, the term "including" and its variants are open-ended including, that is, "including but not limited to". The term "based on" is "at least partially based on". The term "one embodiment" means "at least one embodiment". The term "another embodiment" means "at least one other embodiment". The term "some embodiments" means "at least some embodiments". Related definitions of other terms will be given in the following description.

It should be noted that the concepts of "first" and "second" mentioned in the disclosure are only used to distinguish different devices, modules or units, and are not used to limit the order or interdependence of the functions performed by these devices, modules or units.

It should be noted that the modifications of "a" and "a plurality" mentioned in the disclosure are schematic rather than limiting, and those skilled in the art should understand that they should be understood as "one or more" unless the context clearly indicates otherwise.

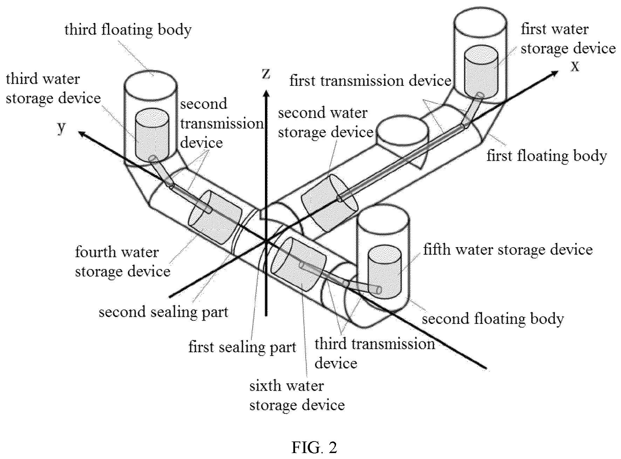

Refer to FIG. 2, it shows that a schematic structural diagram of a floating wind pow floating body provided by the embodiment of the disclosure. The floating wind power floating body includes a first floating body, a second floating body and a third floating body; a first water storage device and a second water storage device are arranged in the first floating body; a third water storage device and a fourth water storage device are arranged in the second floating body; a fifth water storage device and a sixth water storage device are arranged in the third floating body;
the first floating body is connected with the second floating body through a first sealing part; the first floating body is connected with the third floating body through a second sealing part;
the first water storage device is connected with the second water storage device through first transmission devices; the third water storage device is connected with the fourth water storage device through second transmission devices; the fifth water storage device is connected with the sixth water storage device through third transmission devices;
where, the first transmission devices, the second transmission devices and the third transmission devices are respectively provided with a water pumping device; a length of the first floating body is greater than lengths of the second floating body and the third floating body, and a length of the second floating body is equal to a length of the third floating body.

In the specific application process, by dividing the floating wind power floating body into three floating bodies, the water pumping device in the transmission device in each floating body can be controlled to work at the same time, and the liquid stored in the initial water storage device flows to the terminal water storage device connected with it at a preset flow rate or a target flow rate, so as to realize that the terminal water storage device in each floating body simultaneously stores water with target volume, so as to adjust the center of gravity of the floating wind power floating body to the intersection point of XOY planes. The floating wind power floating body is balanced, instead of respectively transmitting the water in the first water storage bucket 1 to the second water storage bucket 2 and the third water storage bucket 3 as the existing floating wind power floating body, thus reducing the balance adjustment time of the floating wind power floating body.

In this embodiment, the water storage device in the floating wind power float can be a water storage bucket, the transmission device can be a water pipe, and the water pumping device can be a water pump. The specific selection of the water storage device, the transmission device and the water pumping device can be selected according to the actual application, and the embodiment of this disclosure is not limited here.

The water storage device can be a first water storage device, a second water storage device, a third water storage device, a fourth water storage device, a fifth water storage device or a sixth water storage device. The transmission device may be a first transmission device, a second transmission device, or a third transmission device.

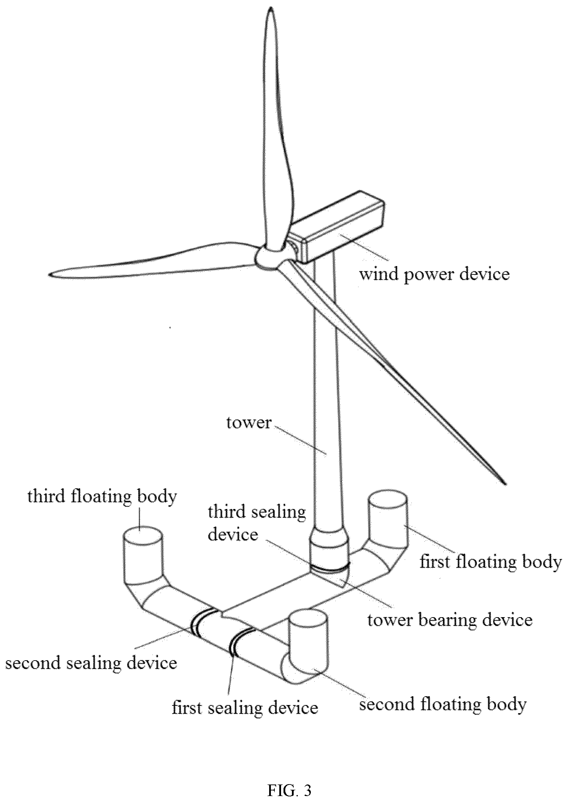

With reference to FIG. 2, referring to FIG. 3, the first floating body is also provided with a tower bearing device, a tower and a wind power device;
one end of the tower is connected with the wind power device, and an other end of the tower is connected with the tower bearing device through a third sealing part, so as to support the tower and the wind power device through the tower bearing device.

As a preferred mode of the embodiment of the disclosure, the first sealing part, the second sealing part and the third sealing part are flanges.

The above is only the preferred mode of a sealing part in the embodiment of this disclosure, and the specific options of the sealing part can be selected according to the actual application, and the embodiment of this disclosure is not limited.

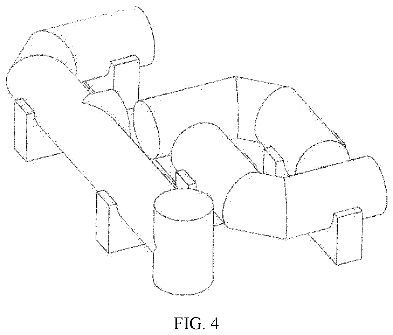

In the embodiment of the disclosure, before splicing the first floating body, second floating body and third floating body of floating wind power floating bodies, a fixing device corresponding to each floating body can be set, and each floating body can be fixed in the corresponding fixing device, as shown in FIG. 4, so as to avoid mutual wear of each floating body of floating wind power floating body during transportation.

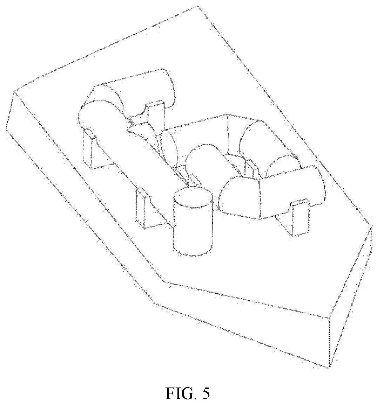

Further, in the embodiment of the disclosure, a corresponding storage device can be further arranged to store the floating bodies fixed by the corresponding fixing devices on the storage device, as shown in FIG. 5, so as to further avoid the floating wind power floating body from being damaged during transportation.

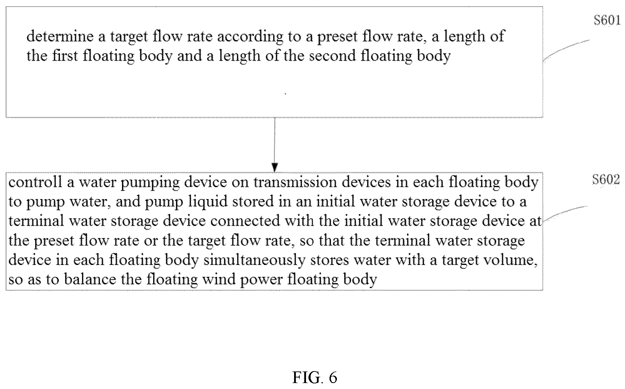

Referring to FIG. 6, a schematic flow chart of a method for balancing a floating wind power floating body provided by an embodiment of the disclosure is shown. The method for balancing a floating wind power floating body is suitable for the floating wind power floating body provided by the embodiment of the disclosure, and specifically includes the following steps.

S601: a target flow rate is determined according to a preset flow rate, a length of the first floating body and a length of the second floating body.

Where, if the preset flow rate is a flow rate of liquid in first transmission devices, the target flow rate is a flow rate of liquid in second transmission devices; if the preset flow rate is the flow rate of liquid in the two transmission devices, the target flow rate is the flow rate of liquid in the first transmission devices; the flow rate of liquid in the second transmission devices is equal to a flow rate of liquid in the third transmission devices.

According to the research of the applicant, after the floating wind power floating body is divided into three floating bodies, it is possible to pump the VL liquid stored in the first water storage device to the second water storage device, the VL liquid stored in the third water storage device to the fourth water storage device, and the VL liquid stored in the fifth water storage device to the sixth water storage device instead of the original VL liquid pumped from the first water storage bucket 1 to the second water storage bucket 2 and the third water storage bucket 3 respectively.

That is to say, the time taken to respectively pump VL liquid from first water storage bucket 1 to second water storage bucket 2 and third water storage bucket 3 can be T1=V/a×(P+D), while the time taken to pump VL liquid stored in the first water storage device to the second water storage device, pump VL liquid stored in the third water storage device to the fourth water storage device, and pump VL liquid stored in the fifth water storage device to the sixth water storage device can be T2=max{V/a×P,V/a×D}. Where VL is the volume of liquid stored in the first water storage device, the third water storage device and the fifth water storage device, and aL/(H·m) is the flow rate of the liquid in the first transmission device, the second transmission device and the third transmission device, P(m) is the length of the first floating body in the XOP plane of the floating wind power floating body, and D(m) is the length of the second floating body and the third floating body in the XOP plane of the floating wind power floating body.

It can be seen that compared with the existing floating wind power floating body and the floating wind power floating body provided by the embodiment of the disclosure, the same amount of liquid can be pumped without changing the pumping power of the adopted water pumping device and the flow rate of the liquid, and the floating wind power floating body provided by the embodiment of the disclosure takes shorter time.

In order to balance the floating wind power floating body provided by the disclosure, it is necessary to control the volumes of liquid in the second water storage device, the fourth water storage device and the sixth water storage device in the floating wind power floating body to reach VL at the same time. That is to say, the water pumping time of the water pumping device arranged on the first transmission device, the water pumping time of the water pumping device arranged on the second transmission device and the water pumping time of the water pumping device arranged on the third transmission device are the same, so the floating wind power floating body needs to satisfy V/a×P=V/b×D, that is, b=aD/P. Where VL is the volume of liquid stored in the first water storage device, the third water storage device and the fifth water storage device, aL/(h·m) is the flow rate of liquid in the first transmission device, bL/(h·m) is the flow rate of liquid in the second transmission device and third transmission device, Pm is the length of the first floating body, and Dm is the length of the second floating body and the third floating body.

Therefore, in the embodiment of the disclosure, b can be set as a preset flow rate, or bL/(h·m) can be set as a preset flow rate, that is, the flow rate aL/(h·m) of the liquid in the first transmission device can be set as a preset flow rate, or the flow rate *b* of the liquid in the second transmission device can be set as a preset flow rate.

As a preferred mode of the embodiment of the disclosure, if the flow rate of liquid in the first transmission device is a preset flow rate and the flow rates of liquid in the second transmission device and the third transmission device are target flow rates, the specific process of determining the target flow rate according to the preset flow rate, the length of the first floating body and the length of the second floating body in the floating wind power floating body can be as follows: the product of the length of the second floating body and the preset flow rate is calculated, and the product of the length of the second floating body and the preset flow rate is divided by the length of the first floating body to obtain the target flow rate.

For example, if the flow rate aL/(h·m) of the liquid in the first transmission device is a preset flow rate, then the flow rates of the liquid in the second transmission device and the third transmission device are the target flow rate bL/(h·m), and b=aD/P. Suppose a=10⁸ L/(h·m), P=100m and D=50m, then b=aD/P=5×10⁷ L/(h·m).

As another preferred mode of the embodiment of the disclosure, if the flow rate of liquid in the second transmission device is a preset flow rate and the flow rate of liquid in the first transmission device is a target flow rate, the specific process of determining the target flow rate according to the preset flow rate, the length of the first floating body and the length of the second floating body in the floating wind power floating body can be as follows: the product of the length of the first floating body and the preset flow rate is calculated, and the product of the length of the first floating body and the preset flow rate is divided by the length of the second floating body to obtain the target flow rate.

For example, if the flow rate bL/(h·m) of the liquid in the second transmission device is a preset flow rate, the flow rates of the liquid in the second transmission device and the third transmission device are the target flow rate aL/(h·m), and since b=aD/P, then a=bP/D. Suppose b=10⁸ L/(h·m), P=100m and D=50m, then a=bP/D=2*10⁸ L/(h·m).

S602: a water pumping device on transmission devices in each floating body is controlled to pump water, and liquid stored in an initial water storage device is pumped to a terminal water storage device connected with the initial water storage device at the preset flow rate or the target flow rate, so that the terminal water storage device in each floating body simultaneously stores water with a target volume, so as to balance the floating wind power floating body.

Where, water with a target volume is pre-stored in each water inlet device; the initial water storage device and the terminal water storage device connected with the initial water storage device include: the first water storage device and the second water storage device, the third water storage device and the fourth water storage device, and the fifth water storage device and the sixth water storage device.

As a preferred mode of the embodiment of the disclosure, if the flow rate of liquid in the first transmission devices is the preset flow rate and each of flow rates of liquid in the second transmission devices and the third transmission devices is the target flow rate, the specific process of controlling the water pumping device on transmission devices in each floating body to work and pumping liquid stored in the initial water storage device to the terminal water storage device connected with the initial water storage device at the preset flow rate or the target flow rate can be as follows:
a water pumping device on the first transmission devices in the first floating body is controlled to work, and liquid stored in the first water storage device is pumped to the second water storage device at the preset flow rate; a water pumping device on the second transmission devices in the second floating body is controlled to work, and liquid stored in the third water storage device is pumped to the fourth water storage device at the target flow rate; a water pumping device on the third transmission devices in the third floating body is controlled to work, and liquid stored in the fifth water storage device is pumped to the sixth water storage device at the target flow rate.

As another preferred mode of the embodiment of the disclosure, if the flow rate of liquid in the second transmission devices is the preset flow rate and the flow rate of liquid in the first transmission devices is the target flow rate, the specific process of controlling the water pumping device on the transmission devices in each floating body to work and pumping liquid stored in the initial water storage device to the terminal water storage device connected with the initial water storage device at the preset flow rate or the target flow rate can be as follows:
the water pumping device on the first transmission devices in the first floating body is controlled to work, and liquid stored in the first water storage device is pumped to the second water storage device at the target flow rate; the water pumping device on the second transmission devices in the second floating body is controlled to work, and liquid stored in the third water storage device is pumped to the fourth water storage device at the preset flow rate; the water pumping device on the third transmission devices in the third floating body is controlled to work, and liquid stored in the fifth water storage device is pumped to the sixth water storage device at the preset flow rate.

For example, suppose that 1L of liquid is pre-stored in the first water storage device, the third water storage device and the fifth water storage device, the flow rate a=100L/(h·m) of the liquid in the first transmission device is a preset flow rate, the length of the first floating body is P=100m, and the lengths of the second floating body and the third floating body are D=50m, then the target flow rate is b=aD/P=50L/(h·m). That is to say, the flow rate of fluid in the second transmission device and the third transmission device is b=50L/(h·m).

Furthermore, the water pumping time T1=V/a×P=1h for the water pumping device in the first transmission device, the water pumping time T2=V/b×D=1h for the water pumping device in the second transmission device, and the water pumping time T2=V/b×D=1h for the water pumping device in the third transmission device can be calculated.

It can be seen that the water pumping device in the first transmission device in the first floating body is controlled to work at the same time, and the liquid stored in the first water storage device flows to the second water storage device and the water pumping device in the second transmission device in the second floating body at the preset flow rate aL/(h·m) to work, and the liquid stored in the third water storage device flows to the fourth water storage device, and the water pumping device in the third transmission device in the third floating body at the target flow rate bL/(h·m) to work, and the liquid stored in the fifth water storage device flows to the sixth water storage device at the target flow rate bL/(h·m), so that the second water storage device, the fourth water storage device and the sixth water storage device can simultaneously store the VL water, and then the floating wind power floating body provided by the embodiment of the disclosure achieves balance.

In the specific application process, it can be known from the above examples that assuming the flow rate a=100L/(h·m) of liquid in the first transmission device is the preset flow rate, the flow rate of fluid in the second transmission device and the third transmission device b=50L/(h·m), the length of the first floating body is P=100m, and the lengths of the second floating body and the third floating body are D=50m, then the water pumping working time of the water pumping device on each transmission device is 1h.

Similarly, it is assumed that the length of the floating body corresponding to the first water storage bucket 1 of the existing floating wind power floating body shown in FIG. 1 is 100m, and the length of the floating body from the second water storage bucket 2 to the third water storage bucket 3 is 50m. If the volume of liquid pre-stored in the first water storage bucket 1 is 1L, and the flow rate of VL liquid respectively pumped from the first water storage bucket 1 to the second water storage bucket 2 and the third water storage bucket 3 is 100L/(h·m), then the time for the existing floating wind power floating body to pump water is T=V/a×(P+D)=1.5h. That is to say, the existing floating wind power floating body needs 1.5h to reach the balance, while the floating wind power floating body provided by the embodiment of the disclosure only needs 1h to reach the balance, so the corresponding balance time can be reduced by using the floating wind power floating body provided by the embodiment of the disclosure.

The disclosure provides a method for balancing a floating wind power floating body, by dividing the floating wind power floating body into three floating bodies, the water pumping device in the transmission device in each floating body can be controlled to work at the same time, and the liquid stored in the initial water storage device flows to the terminal water storage device connected with it at a preset flow rate or a target flow rate, so as to realize that the terminal water storage device in each floating body simultaneously stores water with target volume. So that the floating wind power floating body is balanced, instead of respectively transmitting the water in the first water storage bucket 1 to the second water storage bucket 2 and the third water storage bucket 3 as the existing floating wind power floating body, thus reducing the balance adjustment time of the floating wind power floating body.

Each embodiment in this description is described in a progressive way, and only the same and similar parts between the embodiments can be referred to each other, and each embodiment focuses on the differences from other embodiments. Especially, for the system or the system embodiment, because it is basically similar to the method embodiment, the description is relatively simple, and the relevant points can only be found in part of the description of the method embodiment. The system and system embodiments described above are only schematic, in which the units described as separate components may or may not be physically separated, and the components displayed as units may or may not be physical units, that is, they may be located in one place or distributed to multiple network units. Some or all of the modules can be selected according to actual needs to achieve the purpose of this embodiment. Ordinary skilled in this field can understand and implement it without creative labor.

Professionals can further realize that the units and algorithm steps of each example described in connection with the embodiments disclosed herein can be realized by electronic hardware, computer software or a combination of the two. In order to clearly illustrate the interchangeability of hardware and software, the composition and steps of each example have been generally described according to functions in the above description. Whether these functions are implemented in hardware or software depends on the specific application and design constraints of the technical scheme. Skilled people can use different methods to realize the described functions for each specific application, but this implementation should not be considered beyond the scope of the disclosure.

The above description of the disclosed embodiments enables those skilled in the art to make or use the disclosure. Many modifications to these embodiments will be obvious to those skilled in the art, and the general principles defined herein can be implemented in other embodiments without departing from the spirit or scope of the disclosure. Therefore, the disclosure is not to be limited to the embodiments shown herein, but is to be accorded the widest scope consistent with the principles and novel features disclosed herein.

The above is only the preferred embodiment of the disclosure, and it should be pointed out that for those skilled in the art, several improvements and embellishments can be made without departing from the principle of the disclosure, and these improvements and embellishments should also be regarded as the protection scope of the disclosure.

## Claims

1. A floating wind power floating body, wherein the floating wind power floating body comprises a first floating body, a second floating body and a third floating body; a first water storage device and a second water storage device are arranged in the first floating body; a third water storage device and a fourth water storage device are arranged in the second floating body; a fifth water storage device and a sixth water storage device are arranged in the third floating body; the first floating body is connected with the second floating body through a first sealing part; the first floating body is connected with the third floating body through a second sealing part; the first water storage device is connected with the second water storage device through first transmission devices; the third water storage device is connected with the fourth water storage device through second transmission devices; the fifth water storage device is connected with the sixth water storage device through third transmission devices; wherein, the first transmission devices, the second transmission devices and the third transmission devices are respectively provided with a water pumping device; a length of the first floating body is greater than lengths of the second floating body and the third floating body, and a length of the second floating body is equal to a length of the third floating body.

2. The floating wind power floating body according to claim 1, wherein the first floating body is further provided with a tower bearing device.

3. The floating wind power floating body according to claim 2, wherein the floating wind power floating body further comprises a tower and a wind power device; one end of the tower is connected with the wind power device, and an other end of the tower is connected with the tower bearing device through a third sealing part, so as to support the tower and the wind power device through the tower bearing device.

4. The floating wind power floating body according to claim 3, wherein the first sealing part, the second sealing part and the third sealing part are flanges.

5. A method for balancing a floating wind power floating body, being suitable for the floating wind power floating body according to any one of claims 1-4, and the floating wind power floating body comprises a first floating body, a second floating body and a third floating body; a first water storage device and a second water storage device are arranged in the first floating body; a third water storage device and a fourth water storage device are arranged in the second floating body; a fifth water storage device and a sixth water storage device are arranged in the third floating body, wherein the method comprises: determining a target flow rate according to a preset flow rate, a length of the first floating body and a length of the second floating body; wherein, if the preset flow rate is a flow rate of liquid in first transmission devices, the target flow rate is a flow rate of liquid in second transmission devices; if the preset flow rate is the flow rate of liquid in the two transmission devices, the target flow rate is the flow rate of liquid in the first transmission devices; the flow rate of liquid in the second transmission devices is equal to a flow rate of liquid in the third transmission devices; controlling a water pumping device on transmission devices in each floating body to pump water, and pumping liquid stored in an initial water storage device to a terminal water storage device connected with the initial water storage device at the preset flow rate or the target flow rate, so that the terminal water storage device in each floating body simultaneously stores water with a target volume, so as to balance the floating wind power floating body; wherein the initial water storage device is internally stored with liquid with a target volume in advance; the initial water storage device and the terminal water storage device connected with the initial water storage device comprise: the first water storage device and the second water storage device, the third water storage device and the fourth water storage device, and the fifth water storage device and the sixth water storage device.

6. The method according to claim 5, wherein, if the flow rate of liquid in the first transmission devices is the preset flow rate and each of flow rates of liquid in the second transmission devices and the third transmission devices is the target flow rate, controlling the water pumping device on transmission devices in each floating body to work and pumping liquid stored in the initial water storage device to the terminal water storage device connected with the initial water storage device at the preset flow rate or the target flow rate comprises: controlling a water pumping device on the first transmission devices in the first floating body to work, and pumping liquid stored in the first water storage device to the second water storage device at the preset flow rate; controlling a water pumping device on the second transmission devices in the second floating body to work, and pumping liquid stored in the third water storage device to the fourth water storage device at the target flow rate; controlling a water pumping device on the third transmission devices in the third floating body to work, and pumping liquid stored in the fifth water storage device to the sixth water storage device at the target flow rate.

7. The method according to claim 6, wherein determining a target flow rate according to the preset flow rate, a length of the first floating body and a length of the second floating body in the floating wind power floating body comprises: calculating product of the length of the second floating body and the preset flow rate, and dividing the product of the length of the second floating body and the preset flow rate by the length of the first floating body to obtain the target flow rate.

8. The method according to claim 5, wherein if the flow rate of liquid in the second transmission devices is the preset flow rate and the flow rate of liquid in the first transmission devices is the target flow rate, controlling the water pumping device on the transmission devices in each floating body to work and pumping liquid stored in the initial water storage device to the terminal water storage device connected with the initial water storage device at the preset flow rate or the target flow rate comprises: controlling the water pumping device on the first transmission devices in the first floating body to work, and pumping liquid stored in the first water storage device to the second water storage device at the target flow rate; controlling the water pumping device on the second transmission devices in the second floating body to work, and pumping liquid stored in the third water storage device to the fourth water storage device at the preset flow rate; controlling the water pumping device on the third transmission devices in the third floating body to work, and pumping liquid stored in the fifth water storage device to the sixth water storage device at the preset flow rate.

9. The method according to claim 8, wherein determining the target flow rate according to the preset flow rate, a length of the first floating body and a length of the second floating body in the floating wind power floating body comprises: calculating product of the length of the first floating body and the preset flow rate, and dividing the product of the length of the first floating body and the preset flow rate by the length of the second floating body to obtain the target flow rate.
